# FASCICULE DE BREVET EUROPEEN

(11) **EP 3 724 128 B1**
(45) Date de publication et mention de la délivrance du brevet: **09.06.2021**
(21) Numéro de dépôt: 18833446.0
(22) Date de dépôt: 03.12.2018
(51) Int. Cl.: C01B 3/38, G01K 1/14, B01J 8/02

(54) **DISPOSITIF DE MESURE DE LA TEMPÉRATURE INTERNE D'UN TUBE DE REFORMAGE**
VORRICHTUNG ZUR MESSUNG DER INNENTEMPERATUR EINES REFORMIERUNGSROHRS
DEVICE FOR MEASURING THE INNER TEMPERATURE OF A REFORMING TUBE

(30) Priorité: 14.12.2017 FR 1762156
(43) Date de publication de la demande: 21.10.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: CADALEN, Sébastien, 75014 PARIS (FR); GARY, Daniel, 78180 MONTIGNY LE BRETONNEUX (FR); PROST, Laurent, 91190 GIF SUR YVETTE (FR)
(86) Numéro de dépôt international: PCT/FR2018/053074
(87) Numéro de publication internationale: WO 2019/115906

(56) Documents cités:
- WO-A1-2011/012875
- US-A- 5 192 132
- US-A1- 2007 116 090

## Description

La présente invention est relative à un dispositif de mesure de la température interne d'un tube de reformage et au tube de reformage le comprenant.

Les fours de reformage du méthane à la vapeur (SMR) sont utilisés pour la production d'hydrogène, de monoxyde de carbone et de gaz de synthèse. Les réactions de craquage de la charge hydrocarbonée sont endothermiques et nécessitent une grande quantité de chaleur. Le four SMR, est une construction parallélépipédique réalisée avec des éléments de structures et des murs constitués de briques en céramique, disposant de sources de chaleur, généralement des rangées de brûleurs, implantés verticalement sur les parois latérales (technologie side-fired), horizontalement sur le plafond ou la sole du four (technologie top-fired et bottom fired respectivement). Des rangées de tubes catalytiques sont disposées dans le four. Les réactions de craquage ont lieu dans ces tubes catalytiques qui sont dimensionnés en longueur, en diamètre et en épaisseur pour permettre aux réactions d'être complètes avec une efficacité de procédé recherchée proche de l'équilibre thermodynamique. Ces tubes cylindriques ont des dimensions et une forme uniformes (typiquement 12m de hauteur, 10 cm de diamètre interne et avec une épaisseur de l'ordre de 1 à 1,5 cm), mais avec une capacité limitée de transfert de chaleur. Le transfert de chaleur est une des étapes limitantes du procédé. L'évaluation du transfert de chaleur tout au long du tube de reformage n'est pas aisée, mais il peut être estimé en utilisant des outils de simulations.

La précision des résultats donnés par la simulation est dépendante de plusieurs paramètres qui vont alimenter le modèle. La connaissance du profil de température réelle qui siège dans les tubes catalytiques contribue à la validation du modèle. Pour améliorer la précision des résultats, il est important de pouvoir mesurer ce profil de température. La mesure de température en peau externe du tube est possible, elle peut être obtenue en utilisant par exemple un pyromètre ou une caméra IR ayant une longueur d'onde de par exemple de 3,1 µm, ou en soudant des thermocouples de contact à différentes élévations du tube. La mesure interne est délicate. De plus les tubes sont chargés de catalyseur qui se présentent généralement sous la forme par exemple de pellet percé de plusieurs trous et de diamètres proche de 15-20 mm et qui constituent un empilement aléatoire de particules solides au sein du tube. Le nombre de pellet au diamètre est selon les dimensions données précédemment limité à environ 5 particules solides mais ce nombre peut évoluer en fonction de la dimension des pellets utilisés. L'instrumentation utilisée pour mesurer cette température interne doit être peu encombrante pour ne pas perturber les écoulements dans le tube et résistante aux conditions de température et d'atmosphère. De plus un gradient thermique important est présent entre l'entrée (>450°C) et la sortie (950°C) du tube. Le profil de gradient n'est pas linéaire entre ces deux points puisqu'à cause de la réaction endothermique qui se produit dans le tube et la limitation de transfert de chaleur entre la peau externe et interne de ce dernier, ce profil passe par un minimum qui en fonction des conditions opératoires et du type de four peut descendre jusqu'à 450°C dans les trois premiers mètres.

Partant de là, un problème qui se pose est de fournir un moyen amélioré pour mesurer en continu de la température interne des tubes de reformage Il convient de mentionner ici plusieurs solutions connues de l'état de la technique. US2007116090 A1 divulgue une structure servant à guider l'installation d'un puits thermométrique pour capteur de température dans un tube de réaction contenant un catalyseur à lit fixe comprenant un tube de guidage, deux montants du tube de guidage et trois tiges de support. US5192132 A divulgue un dispositif de mesure de la température dans un tube de réaction contenant un catalyseur à lit fixe comprenant plusieurs thermocouples dont les fils courent à l'intérieur d'un conduit tubulaire central et de conduits latéraux. WO2011012876 A1 divulgue un dispositif de mesure de la température interne d'un tube de reformage catalytique permettant le positionnement d'un thermocouple le long de l'axe de rotation du tube sur toute la longueur du tube. Le maintien en place du thermocouple dans cette position centrale est réalisé notamment grâce à des anneaux et des espaceurs.

Une solution de la présente invention est un dispositif de mesure de la température interne d'un tube de reformage 1 comprenant :
- une première structure 2 constituée d'au moins une partie 2a de forme tubulaire positionnée dans le sens de la longueur du tube et d'une expansion 2b de cette partie de forme tubulaire projetée radialement vers l'axe central 3 du tube de reformage,
- au moins une deuxième structure 4 de forme oblongue comprenant au moins un thermocouple de conducteurs Nicrosil/Nisil soudés disposée longitudinalement contre la partie de forme tubulaire de la première structure et radialement contre l'expansion de la première structure et
- une gaine externe 5 enveloppant la première et la seconde structure. De préférence la gaine externe est en matériau d'isolation électrique.

Pour rappel le nicrosil est un alliage comprenant du nickel, du chrome (14 %) et du silicium (1,5 %) et le nisil est un alliage comprenant du nickel, du silicium (4,5 %) et du magnésium (0,1 %). Le thermocouple Nicrosil/Nisil est très stable, résistant à la température et à ses variations.

Par ailleurs notons que par « expansion projetée radialement » on entend une expansion se projetant en direction de l'axe central ou approximativement en direction de l'axe central du tube de reformage. De préférence l'expansion de la première structure est projetée radialement en formant un Té.

Le diamètre de la partie de forme tubulaire de la première structure présentera par exemple un diamètre compris entre 6 et 10 mm pour un tube de reformage présentant un diamètre interne compris entre 100 et 120 mm. De préférence on appliquera un ratio diamètre de la forme tubulaire de la première structure sur diamètre interne du tube de reformage compris entre 5% et 15%, plus préférentiellement compris entre 5% et 10%. Notons que le diamètre de la partie de forme tubulaire dépendra également du nombre de thermocouples de la deuxième structure.

L'expansion de la première structure pourra avoir le même diamètre que la partie de forme tubulaire.

Selon le cas, le dispositif de mesure selon l'invention peut présenter une ou plusieurs des caractéristiques suivantes :
- les conducteurs sont soudés en une pointe 6 située à l'extrémité de l'expansion.
- ledit dispositif comprend une structure en arc de cercle permettant de renforcer le maintien du dispositif contre la paroi interne du tube de reformage.
- la deuxième structure est ligaturée 7 sur la première structure.
- la première structure comprend au moins une première et une deuxième expansions projetées radialement vers l'axe central du tube de reformage et situées à des hauteurs différentes du tube, la deuxième structure comprend au moins un premier et un deuxième thermocouples de conducteurs Nicrosil/Nisil soudés disposées radialement contre respectivement la première et la deuxième expansions de la première structure et longitudinalement contre la partie de forme tubulaire de la première structure.
- l'espace restant entre la gaine externe, la première structure et la deuxième structure est rempli par une brasure 8, de préférence une brasure en argent. En effet, la brasure sera compatible avec les conditions de pression, température et composition du gaz.
- l'extrémité supérieure de la première structure est obturée.
- ledit dispositif de mesure est constitué d'un seul bloc ou de plusieurs blocs raccordés.

La présente invention a également pour objet un tube de reformage comprenant un dispositif de mesure de la température interne d'un tube de reformage tel que défini dans l'invention et placé contre la paroi interne du tube de reformage.

Le dispositif de mesure est maintenu contre la paroi interne du tube de reformage à l'aide de l'arc de cercle puis par l'empilement de la charge catalytique.

Notons que le fait de placer le dispositif de mesure de la température contre la paroi interne du réacteur permet de minimiser les perturbations au chargement du tube de reformage puis lors de l'écoulement des fluides.

Selon le cas, le tube de reformage selon l'invention peut présenter une ou plusieurs des caractéristiques suivantes :
- ledit tube de reformage présente à son extrémité supérieure une plaque de fermeture 9 et le dispositif de mesure de la température est installé à travers cette plaque de fermeture. Autrement dit une partie du dispositif de mesure avec sa gaine débouche de la plaque de fermeture
- ledit dispositif de mesure est connecté à des moyens classiques d'acquisition et de stockage de données.
- l'extrémité de l'expansion de la première structure du dispositif de mesure est située à une distance comprise entre 2 et 5 mm de l'axe central du tube de reformage.

Notons également que la plaque d'entrée du tube de reformage est pourvue d'une canalisation véhiculant le mélange gazeux à reformer et la sortie est équipée d'un moyen de collecte de gaz de synthèse

La présente invention va à présent être décrite plus en détail.

Chaque thermocouple sera chemisé par une enveloppe métallique, de préférence une enveloppe en Inconel, qui contiendra la paire de conducteurs. Le nombre de thermocouples dépendra du nombre de mesure à réaliser. En effet, chaque pointe de thermocouple (point de soudage entre les deux conducteurs) sera à un emplacement unique le long du tube de reformage de manière à former une pluralité de paires conductrices fournissant des indications de température aux emplacements longitudinaux uniques.

Les thermocouples seront disposés longitudinalement contre la partie de forme tubulaire de la première structure et radialement contre l'expansion de la première structure projetée radialement vers l'axe central du tube de reformage. Le dispositif disposera de différentes altitudes d'expansion. Ces expansions seront constituées par exemple par un demi-tube creux de faible diamètre (ce diamètre sera de 2 à 4 fois supérieur à celui du thermocouple). Il qui assurera une fonction de bouclier pour protéger le thermocouple au remplissage du tube et il servira également de support pour fixer les thermocouples qui seront positionnés au-dessous de ces demi-tubes.

Chaque thermocouple est ligaturé longitudinalement sur la partie tubulaire de la première structure et radialement sur l'expansion. Préférentiellement, la ligature sera réalisée au moyen de fils ou de colliers compatibles avec les conditions opératoires. La nature de ces ligatures sera préférentiellement en inconel.

On veillera également à ce que la pointe du thermocouple ne soit pas en contact avec l'expansion pour que la mesure soit représentative du gaz, pour cela une perle céramique pourra être insérée et cercler l'extrémité du thermocouple.

Le diamètre de la partie de forme tubulaire de la première structure sera déterminé en fonction du nombre de thermocouples à placer. Les expansions de la première structure seront soudées sur la partie de forme tubulaire à différentes altitudes afin d'obtenir le profil de température du tube.

Le dispositif peut être proposé en :
- un monobloc mais sa longueur supérieure ou égale à 10 m peut engendrer des contraintes d'encombrement lors du transport et/ou de l'installation ; ou
- en plusieurs blocs ou sections. Les différentes sections seront alors raboutées au cours de l'installation à l'aide d'une douille de raccordement permettant la jonction.

Le positionnement du dispositif sera renforcé par la mise en place à différentes altitudes d'arc de cercle métallique, préférentiellement en Inconel . Ces renforts vont rigidifier l'ensemble et garantir le maintien en position du dispositif lors du chargement du tube de reformage avec le catalyseur et plus particulièrement assurer que le thermocouple reste positionné au cœur du lit catalytique.

Le dispositif traversera la plaque de fermeture à l'extrémité supérieure du tube de reformage. L'extrémité supérieure de la première structure du dispositif sera obturée. La base de la gaine externe sera soudée sur la plaque de fermeture du tube de reformage. L'espace restant entre la gaine externe et la première structure (c'est-à-dire non occupé par la deuxième structure) est rempli par une brasure compatible avec les conditions de pression, température et composition du gaz, par exemple une brasure en argent, afin d'étancher le système. En fonctionnement le tube de reformage est sous pression (par exemple 30 bar) en température (supérieure à 450°C) et avec une atmosphère combustible. En effet, l'atmosphère est généralement riche en CH4, CO et H2.

L'étanchéité du dispositif est capitale ; les fuites ne sont pas acceptables au regard du caractère inflammable et toxique du mélange gazeux présent dans le tube. Ce dispositif sera rallongé au-delà de la plaque de fermeture, qui est à 250-300°C, pour déporter la zone à étancher dans une zone moins chaude et moins contraignante pour le choix de la brasure. De cette zone vont émerger la pluralité de thermocouple. Les extrémités des conducteurs seront rassemblées dans un boitier ATEX (c'est-à-dire un boitier compatible avec une atmosphère explosive) prévu à cet effet, pour récupérer les signaux et les amplifier aux besoins pour les envoyer vers un système d'acquisition qui pourra se situer en salle de contrôle.
Les figures vont illustrer le dispositif selon l'invention.
La figure la montre le positionnement du dispositif de mesure de la température au sein du tube de reformage. Le dispositif est plaqué contre la peau interne du tube de reformage et la structure en arc de cercle est là pour garantir son maintien en position, notamment durant le remplissage du tube du catalyseur.

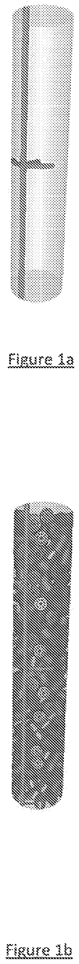

La figure 1b montre la façon dont l'empilement se crée autour du dispositif. En effet celui-ci a pour vocation de mesurer la température du gaz dans le lit catalytique sans créer de défaut d'empilement qui pourrait engendrer un échauffement local de la température ou engendrer des phénomènes fluidiques autour du thermocouple qui conduirait à une mesure biaisée et non représentative de la réalité de la physique. Ce résultat est obtenu par simulation avec le logiciel DigiPac.

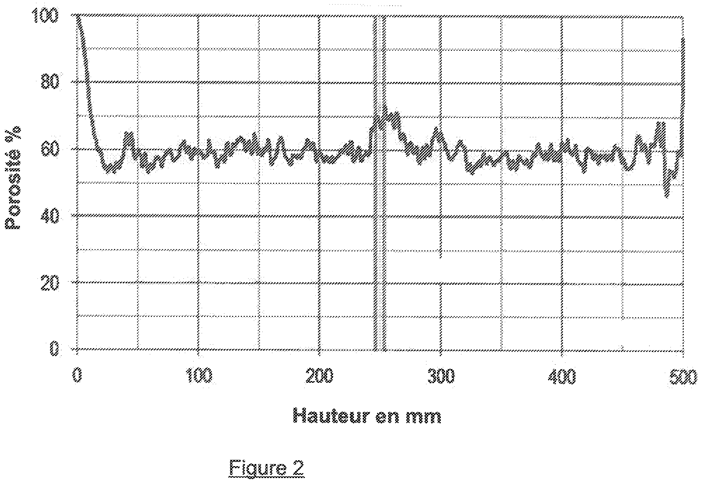

Autour du dispositif des zones vides propices à une circulation préférentielle du gaz sont observées. Cependant, il a été montré que le risque de création de points chauds est modéré même avec des vides plus importants. La figure 2 montre un profil de porosité le long du tube moyenné sur la section du tube. Ici l'expansion est située à l'altitude z = 250 mm (z=0 étant pris à la hauteur de la sole du four). La perturbation contribue à augmenter localement la porosité d'environ 10%. Cette zone perturbée se situe au niveau de l'expansion et sous l'expansion. Au regard des variations de porosité provenant de la nature aléatoire de l'empilement (+/- 5%) ce défaut de porosité ne sera pas en mesure de générer des effets indésirables qui viendrait entacher d'erreur de mesure de température. Autrement dit, nous pouvons considérer que l'empilement des catalyseurs dans le tube de reformage comprenant le dispositif de mesure de la température selon l'invention est bon.

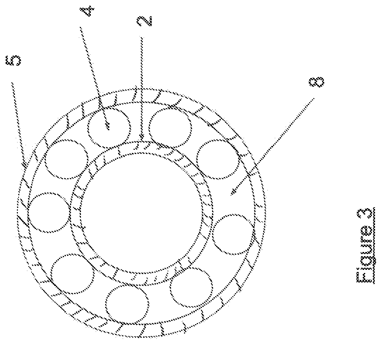

La figure 3 présente une vue de dessus du dispositif de mesure de la température.

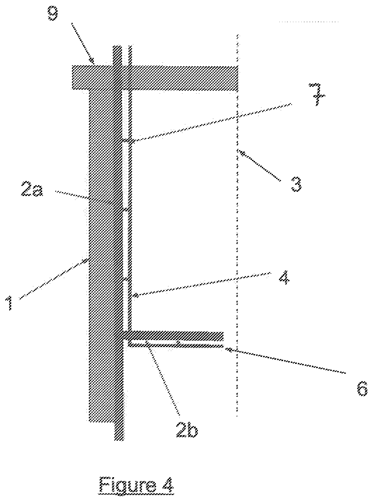

La figure 4 schématise une vue de côté du tube de reformage avec le dispositif de mesure.

Pour une meilleure visibilité la gaine externe n'a pas été représentée et seule une portion du tube de reformage a été représentée. Sont représentés :
- le tube de reformage 1
- la première structure 2 constituée d'au moins une partie 2a de forme tubulaire positionnée dans le sens de la longueur du tube et d'une expansion 2b de cette partie de forme tubulaire projetée radialement vers l'axe central 3 du tube de reformage,
- la deuxième structure 4 de forme oblongue comprenant au moins un thermocouple de conducteurs Nicrosil/Nisil soudés disposée longitudinalement contre la partie de forme tubulaire de la première structure et radialement contre l'expansion de la première structure,
- les ligatures 7
- la pointe 6 où sont soudés les conducteurs, et
- la plaque de fermeture 9 du tube de reformage.

Notons que l'expansion de la première structure pourra être percée pour laisser passer le thermocouple.

## Revendications

1. Dispositif de mesure de la température interne d'un tube de reformage (1) comprenant :
- une première structure (2) constituée d'au moins une partie (2a) de forme tubulaire positionnée dans le sens de la longueur du tube et d'une expansion (2b) de cette partie de forme tubulaire projetée radialement vers l'axe central (3) du tube de reformage,
- au moins une deuxième structure (4) de forme oblongue comprenant au moins un thermocouple de conducteurs Nicrosil/Nisil soudés disposée longitudinalement contre la partie de forme tubulaire de la première structure et radialement contre l'expansion de la première structure et
- une gaine externe (5) enveloppant la première et la seconde structure.

2. Dispositif selon la revendication 1, **caractérisé en ce que** les conducteurs sont soudés en une pointe (6) située à l'extrémité de l'expansion.

3. Dispositif selon l'une des revendications 1 ou 2, **caractérisé en ce que** ledit dispositif comprend une structure en arc de cercle permettant de renforcer le maintien du dispositif contre la paroi interne du tube de reformage.

4. Dispositif selon l'une des revendications 1 à 3, **caractérisé en ce que** la deuxième structure est ligaturée (7) sur la première structure.

5. Dispositif selon l'une des revendications 1 à 4, **caractérisé en ce que** :
- la première structure comprend au moins une première et une deuxième expansions projetées radialement vers l'axe central du tube de reformage et situées à des hauteurs différentes du tube,
- la deuxième structure comprend au moins un premier et un deuxième thermocouples de conducteurs Nicrosil/Nisil soudés disposées radialement contre respectivement la première et la deuxième expansions de la première structure et longitudinalement contre la partie de forme tubulaire de la première structure.

6. Dispositif selon l'une des revendications 1 à 5, **caractérisé en ce que** l'espace restant entre la gaine externe, la première structure et la deuxième structure est rempli par une brasure (8).

7. Dispositif selon l'une des revendications 1 à 6, **caractérisé en ce que** l'extrémité supérieure de la première structure est obturée.

8. Dispositif selon l'une des revendications 1 à 7, **caractérisé en ce que** ledit dispositif de mesure est constitué d'un seul bloc ou de plusieurs blocs raccordés.

9. Tube de reformage comprenant un dispositif de mesure de la température interne d'un tube de reformage tel que défini dans l'une des revendications 1 à 8 placé contre la paroi interne du tube de reformage.

10. Tube de reformage selon la revendication 9, **caractérisé en ce que** ledit tube de reformage présente à son extrémité supérieure une plaque de fermeture (9) et le dispositif de mesure de la température est installé à travers cette plaque de fermeture.

11. Tube de reformage selon la revendication 10, **caractérisé en ce que** ledit dispositif de mesure est connecté à des moyens classiques d'acquisition et de stockage de données.

12. Tube de reformage selon l'une des revendications 9 à 11, **caractérisé en ce que** l'extrémité de l'expansion de la première structure du dispositif de mesure est située à une distance comprise entre 2 et 5 mm de l'axe central du tube de reformage.

## Patentansprüche

1. Vorrichtung zur Messung der Innentemperatur eines Reformierungsrohrs (1) umfassend:
- eine erste Struktur (2), die von mindestens einem rohrförmigen Abschnitt (2a), der in Längsrichtung des Rohrs positioniert ist, und einer Erweiterung (2b) dieses rohrförmigen Abschnitts, die zur Mittelachse (3) des Reformierungsrohrs radial absteht, gebildet ist,
- mindestens eine zweite Struktur (4) länglicher Form, die mindestens ein Thermoelement aus geschweißten Nicrosil/Nisil-Leitern umfasst, die längs am rohrförmigen Abschnitt der ersten Struktur und radial an der Erweiterung der ersten Struktur angeordnet ist, und
- eine Außenhülle (5), die die erste und die zweite Struktur umhüllt.

2. Vorrichtung nach Anspruch 1, **dadurch gekennzeichnet, dass** die Leiter an einer Spitze (6) geschweißt sind, die sich am Ende der Erweiterung befindet.

3. Vorrichtung nach einem der Ansprüche 1 oder 2, **dadurch gekennzeichnet, dass** die Vorrichtung eine Kreisbogenstruktur umfasst, die es gestattet, den Halt der Vorrichtung an der Innenwand des Reformierungsrohrs zu verstärken.

4. Vorrichtung nach einem der Ansprüche 1 bis 3, **dadurch gekennzeichnet, dass** die zweite Struktur an der ersten Struktur angebunden (7) ist.

5. Vorrichtung nach einem der Ansprüche 1 bis 4, **dadurch gekennzeichnet, dass**:
- die erste Struktur mindestens eine erste und eine zweite Erweiterung umfasst, die zur Mittelachse des Reformierungsrohrs radial abstehen und sich auf verschiedenen Höhen des Rohrs befinden,
- die zweite Struktur mindestens ein erstes und ein zweites Thermoelement aus geschweißten Nicrosil/Nisil-Leitern umfasst, die radial an der ersten bzw. zweiten Erweiterung der ersten Struktur und längs am röhrenförmigen Abschnitt der ersten Struktur angeordnet sind.

6. Vorrichtung nach einem der Ansprüche 1 bis 5, **dadurch gekennzeichnet, dass** der Raum, der zwischen der Außenhülle, der ersten Struktur und der zweiten Struktur bleibt, von einem Lot (8) gefüllt ist.

7. Vorrichtung nach einem der Ansprüche 1 bis 6, **dadurch gekennzeichnet, dass** das obere Ende der ersten Struktur verschlossen ist.

8. Vorrichtung nach einem der Ansprüche 1 bis 7, **dadurch gekennzeichnet, dass** die Messvorrichtung von einem einzelnen Block oder mehreren verbundenen Blöcken gebildet ist.

9. Reformierungsrohr umfassend eine Vorrichtung zur Messung der Innentemperatur eines Reformierungsrohrs nach einem der Ansprüche 1 bis 8, die an der Innenwand des Reformierungsrohrs platziert ist.

10. Reformierungsrohr nach Anspruch 9, **dadurch gekennzeichnet, dass** das Reformierungsrohr an seinem oberen Ende eine Schließplatte (9) aufweist und die Vorrichtung zur Messung der Temperatur durch diese Schließplatte hindurch installiert ist.

11. Reformierungsrohr nach Anspruch 10, **dadurch gekennzeichnet, dass** die Messvorrichtung an herkömmliche Datenerfassungs- und -speichermittel angeschlossen ist.

12. Reformierungsrohr nach einem der Ansprüche 9 bis 11, **dadurch gekennzeichnet, dass** sich das Ende der Erweiterung der ersten Struktur der Messvorrichtung in einem Abstand zwischen 2 und 5 mm von der Mittelachse des Reformierungsrohrs befindet.

## Claims

1. Device for measuring the internal temperature of a reforming tube (1) comprising:
- a first structure (2) made up of at least a part (2a) of tubular shape positioned in the lengthwise direction of the tube and of an expansion (2b) of this tubular-shaped part projecting radially towards the central axis (3) of the reforming tube,
- at least a second structure (4) of oblong shape comprising at least one thermocouple made of welded Nicrosil/Nisil conductors arranged longitudinally against the tubular-shaped part of the first structure and radially against the expansion of the first structure, and
- an outer sheath (5) enveloping the first and second structure.

2. Device according to Claim 1, **characterized in that** the conductors are welded at a tip (6) situated at the end of the expansion.

3. Device according to one of Claims 1 and 2, **characterized in that** said device comprises a structure in the form of an arc of a circle reinforcing the retention of the device against the internal wall of the reforming tube.

4. Device according to one of Claims 1 to 3, **characterized in that** the second structure is tied (7) to the first structure.

5. Device according to one of Claims 1 to 4, **characterized in that**:
- the first structure comprises at least a first and a second expansion projecting radially toward the central axis of the reforming tube and situated at different heights on the tube,
- the second structure comprises at least a first and a second thermocouple made of welded Nicrosil/Nisil conductors positioned radially against, respectively, the first and second expansions of the first structure and longitudinally against the tubular-shaped part of the first structure.

6. Device according to one of Claims 1 to 5, **characterized in that** the remaining space between the outer sheath, the first structure and the second structure is filled with a solder (8).

7. Device according to one of Claims 1 to 6, **characterized in that** the upper end of the first structure is plugged.

8. Device according to one of Claims 1 to 7, **characterized in that** said measurement device is made up of a single unit or of several units joined together.

9. Reforming tube comprising a device for measuring the internal temperature of a reforming tube as defined in one of Claims 1 to 8 and placed against the internal wall of the reforming tube.

10. Reforming tube according to Claim 9, **characterized in that** said reforming tube has at its upper end a blanking plate (9) and the temperature measuring device is installed through this blanking plate.

11. Reforming tube according to Claim 10, **characterized in that** said measuring device is connected to conventional data acquisition and storage means.

12. Reforming tube according to one of Claims 9 to 11, **characterized in that** the end of the expansion of the first structure of the measuring device is situated at a distance of between 2 and 5 mm from the central axis of the reforming tube.
